# FASCICULE DE BREVET EUROPEEN

(11) **EP 1 220 767 B1**
(45) Date de publication et mention de la délivrance du brevet: **10.03.2004**
(21) Numéro de dépôt: 00974390.7
(22) Date de dépôt: 13.10.2000
(51) Int. Cl.: B60R 16/02

(54) **DISPOSITIF DE FIXATION DE FAISCEAU DE CABLES DANS UNE PLANCHE DE BORD**
KABELBAUMBEFESTIGUNGSVORRICHTUNG IN EINEM ARMATURENBRETT
DEVICE FOR FIXING A CABLE BUNDLE IN AN INSTRUMENT PANEL

(30) Priorité: 15.10.1999 FR 9912868
(43) Date de publication de la demande: 10.07.2002
(73) Titulaire: Siemens Automotive EEDS Systems, 31036 Toulouse Cedex 01 (FR)
(72) Inventeur: Degardins, Pascal, 31600 Muret (FR)
(74) Mandataire: Patentanwaltskanzlei WILHELM & BECK
(86) Numéro de dépôt international: PCT/EP2000/010106
(87) Numéro de publication internationale: WO 2001/028817

(56) Documents cités:
- DE-A- 4 029 378
- DE-A- 4 033 804
- US-A- 2 742 249
- PATENT ABSTRACTS OF JAPAN vol. 008, no. 080 (M-289), 12 avril 1984 (1984-04-12) & JP 58 224832 A (NISSAN JIDOSHA KK), 27 décembre 1983 (1983-12-27)

## Description

L'invention est du domaine du câblage électrique de véhicules. En particulier elle concerne le câblage de planche de bord ou de moteur automobile. Dans ce domaine, un faisceau de câbles, destiné par exemple à relier les éléments du tableau de bord aux organes moteurs, comprend couramment plusieurs dizaines de câbles (jusqu'à plusieurs centaines dans le cas de faisceau reliant tous les équipements, des optiques avant aux optiques arrières) attachés ensemble en leur partie centrale, puis orientés chacun selon des directions différentes à chaque extrémité en fonction de leur usage.

Lors de son insertion dans la planche de bord, le câblage est traditionnellement rigidifié et protégé par des pièces en matière plastique nommées goulottes, fixées le plus souvent autour de la traverse métallique qui reprend tous les efforts mécaniques du tableau de bord (et qui sert également à éviter les effets d'écrasement latéral du véhicule).

Le câblage est alors immobilisé dans la goulotte par des fixations de type classique, par exemple des colliers plastiques serrés (cf DE 4029378 qui montre les caractéristiques du préambule de la revendication 1). Les goulottes sont fréquemment fixées sur la traverse métallique par vissage.

On constate actuellement une évolution de l'architecture des tableaux de bord, avec le remplacement de la traverse métallique de forme complexe par une axe tubulaire en acier, sur lequel est moulé ou solidarisé un habillage en matière plastique qui combine des rôles structurels et fonctionnels (par exemple pour la distribution d'air).

La présente invention a alors pour objet de proposer un nouveau dispositif de fixation de câblage dans la planche de bord, qui soit plus simple à utiliser.

Un tel dispositif conforme à l'invention est présenté à la revendication 1.

Préférentiellement, le creusement forme une goulotte de dimensions légèrement supérieures à la section du faisceau de câbles.

Selon un mode particulier de réalisation, le dispositif comporte également au moins un élément en matière déformable compressible, disposé entre la pièce de maintien par compression et le faisceau de câbles.

Préférentiellement, la pièce de maintien par compression est réalisée en matériau élastique, et présente une forme adaptée à la plaquer contre l'habillage au niveau du creusement lorsqu'elle est solidarisée à l'axe tubulaire.

Cette pièce peut par exemple être est une bande métallique préformée. De manière à procurer une grande simplicité de montage, cette pièce est solidarisée à l'axe tubulaire par vissage.

Préférentiellement, l'habillage comporte un moyen de solidarisation à un axe tubulaire, et un creusement de section sensiblement semi-circulaire sur une partie au moins de sa surface.

La description et les dessins qui suivent permettront de mieux comprendre les buts et avantages de l'invention. Il est clair que cette description n'est donnée qu'à titre d'exemple, et n'a pas de caractère limitatif.

Dans les dessins :
- la figure 1 représente un habillage plastique de traverse tubulaire de planche de bord ;
- la figure 2 représente schématiquement en vue de côté le dispositif de fixation de câblage selon l'invention ;
- la figure 3 est une vue de détail de la figure 2 ;
- la figure 4 est une vue de face du même dispositif.

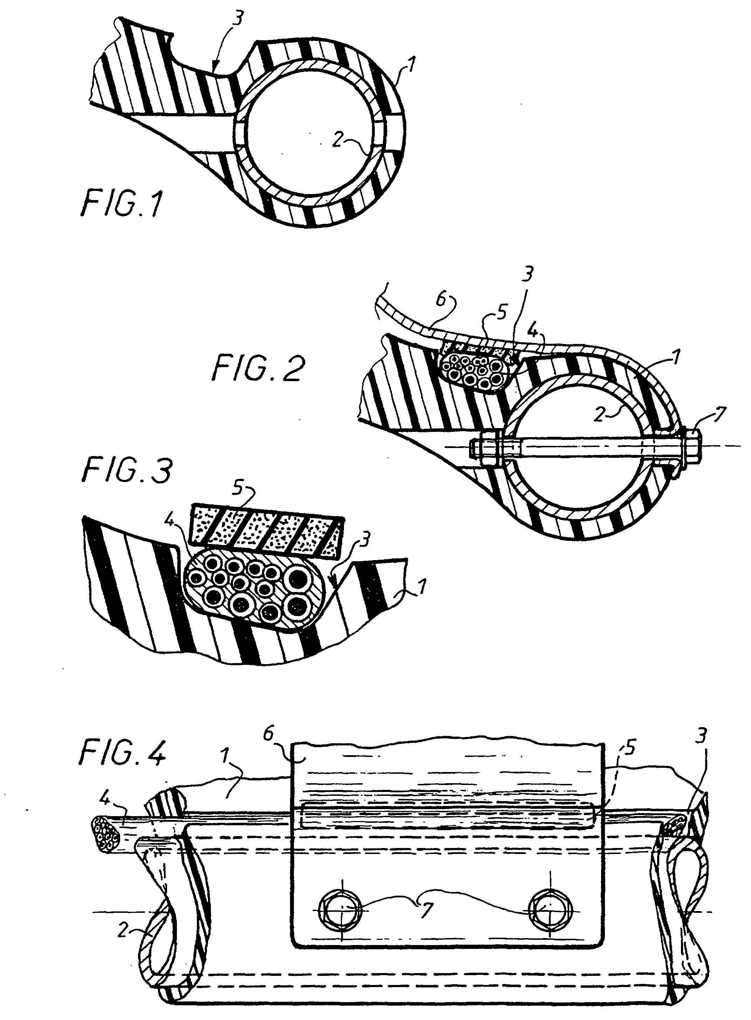

La figure 1 illustre en vue en coupe un habillage plastique 1 pour planche de bord, conforme à l'invention. On voit qu'un tel habillage 1, dont la forme détaillée sort du cadre de la présente invention et est de toute façon propre à un modèle particulier de véhicule, est disposé autour d'un axe tubulaire 2, sensiblement selon sa grande longueur (c'est à dire parallèlement à la longueur du tableau de bord). Cet axe tubulaire 2 est de nature classique, connu de l'homme du métier. Il est par exemple réalisé sous forme d'un simple tube cylindrique en acier, autour duquel est moulé l'habillage 1. On note que l'axe tubulaire 2 et l'habillage 1 réalisent sensiblement la fonction précédemment réalisée par la traverse métallique couramment utilisée dans de nombreux véhicules.

L'habillage comporte en sa partie supérieure (correspondant au haut de la figure 1) un creusement 3 (ou goulotte) de section sensiblement semi-circulaire ou en "U", de dimensions adaptées à accueillir et bien envelopper un faisceau de câbles 4 correspondant au véhicule.

Il est clair que si l'habillage 1 est réalisé par moulage autour de l'axe tubulaire 2, la goulotte 3 doit être prévue de forme et direction adaptée à un démoulage aisé.

La figure 2 montre alors, également en vue de côté, le mode de fixation du faisceau de câbles 4 dans cette goulotte 3. Le faisceau de câbles 4 étant disposé dans la goulotte 3, une pièce déformable compressible 5 (par exemple un élément en mousse polyuréthane) est placée au dessus du faisceau 4, entre autres pour l'isoler et le protéger contre le contact direct avec les pièces de maintien. Par ailleurs, ces éléments déformables 5 permettent d'éviter des mouvement possibles du faisceau de câbles 4 dans la goulotte, qui constitueraient autrement une source de vibrations et donc de bruit dans l'habitacle. Ces éléments permettent enfin de rattraper un jeu sur la section du faisceau de câbles.

Une pièce de maintien élastique 6, fixée sur l'axe tubulaire 2 par des vis 7 vient compresser l'élément en mousse 5 contre le faisceau 4, et le maintient ainsi en place dans la goulotte 3. La pièce de maintien 6 est dans l'exemple décrit ici à titre non limitatif, formée d'une bande métallique préformée. Lors de sa solidarisation sur l'axe tubulaire 2, elle est éloignée de sa forme au repos, ce qui crée une force de rappel élastique, vers le bas sur la figure 2. Cette force permet la compression de l'élément de mousse 5 sur le faisceau 4, sensiblement quel que soit le diamètre dudit faisceau 4.

Le mode d'utilisation du dispositif découle directement de la description qui précède. L'habillage 1 étant déjà mis en place, le faisceau de câbles 4 est disposé dans la goulotte 3 et reste dans cette goulotte 3 sous l'effet de son propre poids. Les pièces destinées à être fixées sur l'axe tubulaire sont fixées dans un second temps. Elles comprennent classiquement le support de colonne, les éléments de climatisation et chauffage, la boîte à gant, les airbags etc.

La disposition du faisceau de câbles en premier lieu peut ainsi provoquer une modification simple de la procédure de montage du cockpit

On comprend que la présente invention permet la suppression des goulottes et donc des temps normalement consacrés aux opérations de fixations desdites goulottes sur la traverse. De même, elle permet de supprimer les opérations de fixation des câblages dans les goulottes.

Par ailleurs, il est possible de simplifier la logistique et la manutention des faisceaux de câbles, en évitant d'avoir à prévoir des pièces de rigidification.

La suppression des goulottes évite enfin des erreurs de positionnement relatif du câble sur la goulotte, qui se traduisent autrement par des difficultés de montage desdites goulottes sur la planche de bord, les câbles étant alors placés de façon erronée.

Dans une variante de réalisation, on tire avantage de ce que de nombreux éléments doivent être fixés sur l'axe tubulaire 2. Dans ce cas, l'un (ou plusieurs) de ces éléments voit sa forme modifiée pour servir également de pièce de maintien 6 du faisceau dans la goulotte 3.

Dans une autre variante, le faisceau de câbles est remplacé par un faisceau de câbles plat flexible.

La portée de la présente invention ne se limite pas aux détails des formes de réalisation ci-dessus considérées à titre d'exemple, mais s'étend au contraire aux modifications à la portée de l'homme de l'art, en accord avec les revendications.

## Revendications

1. Dispositif de fixation de faisceau de câbles dans une planche de bord, le dit dispositif comportant un axe rigide (2) de la planche de bord adapté à reprendre des efforts mécaniques, une pièce (6) de maintien par compression du faisceau dans un creusement et un habillage (1) solidarisé à l'axe rigide (2), le dit dispositif étant **caractérisé en ce que** le creusement (3) est réalisé sur au moins une partie de la surface de l'habillage, et en ce la pièce (6) de maintien est solidarisée à l'axe rigide.

2. Dispositif de fixation selon la revendication 1, **caractérisé en ce que** le creusement (3) forme une goulotte de dimensions légèrement supérieures à la section du faisceau de câbles (4).

3. Dispositif de fixation selon l'une quelconque des revendications 1 à 2, **caractérisé en ce qu'**il comporte également au moins un élément (5) en matière déformable compressible, disposé entre la pièce (6) de maintien par compression et le faisceau de câbles (4).

4. Dispositif de fixation selon l'une quelconque des revendications 1 à 3, **caractérisé en ce que** la pièce de maintien (6) est réalisée en matériau élastique et présente une forme adaptée à la plaquer contre l'habillage (1) au niveau du creusement (3) lorsqu'elle est solidarisée à l'axe tubulaire (2).

5. Dispositif de fixation selon la revendication 4, **caractérisée en ce que** la pièce de maintien est réalisée dans une bande métallique préformée.

6. Dispositif de fixation selon la revendication 4 ou 5, **caractérisée en ce que** la pièce de maintien est solidarisée à l'axe tubulaire (2) par vissage.

7. Dispositif de fixation selon l'une quelconque des revendications 1 à 3, caratérisé en ce que l'habillage (1) comporte un moyen de solidarisation à un axe tubulaire (2), et un creusement (3) de section sensiblement semi-circulaire sur une partie au moins de sa surface.

8. Dispositif de fixation selon la revendication 7, **caractérisé en ce que** l'habillage est solidarisé à l'axe tubulaire (2) par un moulage autour de celui-ci.

## Patentansprüche

1. Vorrichtung zur Befestigung eines Kabelbaums in einem Armaturenbrett, wobei die Vorrichtung eine starre Achse (2) des Armaturenbretts, die dazu angepasst ist, mechanische Beanspruchungen aufzunehmen, ein Teil (6), um den Kabelbaum durch Zusammendrücken in einer Eintiefung zu halten, und eine Verkleidung (1) aufweist, die mit der starren Achse (2) fest verbunden ist,
**dadurch gekennzeichnet, dass** die Eintiefung (3) an mindestens einem Abschnitt der Oberfläche der Verkleidung ausgeführt ist und dass das Halteteil (6) mit der starren Achse fest verbunden ist.

2. Vorrichtung zur Befestigung nach Anspruch 1,
**dadurch gekennzeichnet, dass** die Eintiefung (3) eine Wanne bildet, deren Abmessungen leicht größer als der Querschnitt des Kabelbaums (4) sind.

3. Vorrichtung zur Befestigung nach Anspruch 1 oder 2,
**dadurch gekennzeichnet, dass** sie ebenfalls mindestens ein Element (5) aus zusammendrückbarem elastischen Material aufweist, das zwischen dem Teil (6) zum Halten durch Zusammendrücken und dem Kabelbaum (4) angeordnet ist.

4. Vorrichtung zur Befestigung nach einem der Ansprüche 1 bis 3,
**dadurch gekennzeichnet, dass** das Halteteil (6) in einem elastischen Material ausgeführt ist und eine Form aufweist, die angepasst ist, das Halteteil gegen die Verkleidung (1) auf Höhe der Eintiefung (3) aufzulegen, wenn es mit der Rohrachse (2) fest verbunden ist.

5. Vorrichtung zur Befestigung nach Anspruch 4,
**dadurch gekennzeichnet, dass** das Halteteil in einem vorgeformten Metallstreifen ausgeführt ist.

6. Vorrichtung zur Befestigung nach Anspruch 4 oder 5,
**dadurch gekennzeichnet, dass** das Halteteil mit der Rohrachse (2) durch Verschraubung fest verbunden ist.

7. Vorrichtung zur Befestigung nach einem der Ansprüche 1 bis 3,
**dadurch gekennzeichnet, dass** die Verkleidung (1) ein Mittel zur festen Verbindung mit einer Rohrachse (2) und eine Eintiefung (3) eines im wesentlichen halbkreisförmigen Querschnitts an mindestens einem Abschnitt ihrer Oberfläche aufweist.

8. Vorrichtung zur Befestigung nach Anspruch 7,
**dadurch gekennzeichnet, dass** die Verkleidung mit der Rohrachse (2) durch eine Abformung um diese herum fest verbunden ist.

## Claims

1. Device for fixing a cable bundle in a dashboard, said device having a rigid member (2) within the dashboard adapted to support mechanical loads, a compression retention plate (6) which presses the cable bundle into a groove and a covering (1) fastened to the rigid member (2), said device being **characterised in that** there is a groove (3) on at least part of the surface of the covering and that the retention plate (6) is fastened to the rigid member.

2. Fixing device according to Claim 1, **characterised in that** the groove (3) forms a duct of slightly larger dimensions than the cable bundle section (4).

3. Fixing device according to either of Claims 1 to 2, **characterised in that** it has at least one component (5) made of a flexible, compressible material, placed between the compression retention plate (6) and the cable bundle (4).

4. Fixing device according to one of Claims 1 to 3, **characterised in that** the retention plate (6) is made of an elastic material and its shape allows it to lay flat against the covering (1) at the level of the groove (3) when it is fastened to the tubular member (2).

5. Fixing device according to Claim 4, **characterised in that** the retention plate is made of a preformed metal sheet.

6. Fixing device according to Claim 4 or 5, **characterised in that** the retention plate is screwed to the tubular member (2).

7. Fixing device according to any one of Claims 1 to 3, **characterised in that** the covering (1) has a means for fastening to a tubular member (2) and an approximately semi-circular section groove (3) on at least part of its surface.

8. Fixing device according to Claim 7, **characterised in that** the covering is fastened to a tubular member (2) by moulding.
